# EUROPEAN PATENT APPLICATION

(11) **EP 4 582 706 A1**
(43) Date of publication of application: **09.07.2025**
(21) Application number: 24150477.8
(22) Date of filing: 05.01.2024
(51) Int. Cl.: F16B 37/04, F16B 47/00, F16B 11/00

(54) **FASTENING ELEMENT WITH FIXATION WAX AND METHOD FOR FASTENING SAID FASTENING ELEMENT TO A WORKPIECE**

(71) Applicant: Newfrey LLC, New Britain, CT 06053 (US)
(72) Inventor: Gramsch-Kempkes, Sascha, 35394 Gießen (DE)
(74) Representative: SBD IPAdmin

(57) **Abstract**

Method for fastening a fastening element (10,10') with a workpiece and fastening element (10,10'), for example stud, with a joining surface (12) which has an application area (18) to which a fixation wax (20) is applied, wherein a protective foil (24) is arranged on the fixation wax (20). The joining element may thus be easily stored and transported in bulk and fixed or glued to a workpiece without removing the protective foil (24).

## Description

The present invention relates to a fastening element having pre-applied joining material and a method of using the same.

It is known, for example, in the technical field of joining fasteners to workpieces to weld metallic bolts to metallic workpieces. This method, known as "stud welding", is used, in particular, in the automotive industry in order to weld bolts to car body panels, wherein fixing clips made of plastic are fixed to connect to the bolts, to which fixing clips cables, wires etc. are fixed.

Due to the fact that composite materials that are able to be welded less well or are non-metallic are being increasingly used, for example, in car body construction, such as plastics, fibre composite components, etc., the adhesive bonding technique (or gluing technique or adhering technique) has been established as a joining method in car body panel construction in particular. Instead of welding the bolts or other fasteners to workpieces, they are adhesively bonded (or glued) to the workpiece.

Fastening elements of this kind comprising a fastening section and a contact surface are glued to bodywork parts or workpieces of an automobile, for instance. A second component to be fastened to the bodywork can subsequently be fastened to the fastening sections of the fastening elements.

The adhesive for holding the fastening element on the workpiece is usually applied to the contact surface of the fastening element in a fluid state. The fastening element is then placed onto the workpiece. It is necessary in this case for the fastening element to be held against the carrier component until the glue has hardened and is therefore providing its holding force. Depending on the accessibility of the fastening location for the fastening element and the materials to be used, under certain circumstances, additional measures are required to accelerate the hardening (for example UV radiation) or the fastening element must be held on the workpiece for a comparatively long time until the hardening is sufficiently advanced. Prolonged holding of this kind is time-consuming and undesirable. Holding the fastening element by mechanical means increases the assembly costs.

Document DE102014118973 discloses a fastener having a joining face which has an application region. A joining material (or an adhesive) at least partially covers the application region. The adhesive is generally applied in a heated state and is then cooled down again. The fastener produced in this way is then transported with the adhesive, for example from a place of production to a place where the fastener is to be adhered or bonded or glued to a support face of a workpiece, such as a car body panel, for example. During storage and transportation, it is important to avoid an unwanted chemical crosslinking reaction of the joining material before the actual adhering process. In order to avoid this unwanted chemical crosslinking reaction of the joining material, nowadays, a cooling chain is used. For example, the fasteners are stored and transported in cool boxes. More particularly, the fastener is stored in a frozen state and also transported in a refrigerated state in order to ensure a storage period that lasts several months. Using cooling chains is particularly complicated and expensive. Monitoring the temperature may be necessary and there is a risk of the cooling chain breaking during storage and/or transportation.

It is also known from EP2802785A1 to use a fastening element comprising a contact glue for preliminarily holding the fastening element on a carrier component and a permanent glue for permanently holding the fastening element. The gluing forces of the contact glue are not sufficient to hold the fastening element on the carrier component securely during operation. This is the function of the permanent glue, which provides greater adhesive force than the contact glue after hardening. The adhesive forces of the contact glue are sufficient, however, to hold the fastening element securely in the prescribed position on the carrier component while the permanent glue hardens. However, a risk remains that the two different glue interferes with each other. Besides, the two glues (or also called adhesives) have to be applied on the fastening element on site, the fastening element cannot be transported with the glues applied.

To avoid these problems, EP3330548 discloses a fastener having a joining material with a first adhesive material and a second, different adhesive material, and wherein the first adhesive material covers the second adhesive material. The first adhesive material can remain rigid and solid at room temperature.

To mitigate these drawbacks, application EP23189285.2 is directed to a fastening element comprising at least one fastening section, and a contact surface possibly facing away from the at least one fastening section, wherein a permanent adhesive is applied to a first area of the contact surface, and the contact surface also comprises a second area, different from the first area, wherein a fixation wax is applied on the second area, different from the first area and wherein an anti-tack coating is applied to the fixation wax.

Such fastening elements are satisfactory. However, there is still a need to provide a fastening element to be glued on a workpiece which can be easily assembled, used and transported, and perform a strong joining. More particularly, it is important to decrease the risk for the fastening elements to glue together when they transported or stored in bulk.

Accordingly, the present invention provides a fastening element according to claim 1. More particularly, the fastening element is provided with a joining surface which has an application area to which a fixation wax is applied, wherein a protective foil is arranged on the fixation wax. The fixation wax is a tacky wax, for instance a wax similar to the THOWAX STICK-ON-WACHS commercialized by YETI-DENTALO. The fixation wax enables an immediate holding of the fastening element. Besides, the wax is plastically deformable at ambient temperature and melt from a particular threshold temperature, and the wax generates cohesive strength. Therefore, the use of a fixation wax instead of a fixation adhesive or glue is particularly advantageous. The protective foil added above the fixation wax eliminate any risk of fastening elements being glued together during transport or storage. There is also no need of monitoring the temperature during transport or storage. The protective foil can easily be placed above the fixation wax.

In an embodiment, the fastening element is a stud which has a shank extending along a central axis and a flange extending transversely thereto. In an embodiment, the joining surface is arranged on an upper side of the flange facing away from the shank, and wherein a diameter of the application area is smaller than a diameter of the joining surface.

In an embodiment, the application area is formed by a recess and the fixation wax extends in the recess. Thus, the wax application is facilitated.

In an embodiment, the recess is circular. The circular recess can easily be manufactured.

In an embodiment, the volume of the fixation wax is greater than the interior volume of the recess.

In an embodiment, the recess is a circular recess centred on the flange.

In an embodiment, the protective foil has the same size or is slightly greater than the application area.

In an embodiment, the protective foil is an aluminium foil. In an alternative embodiments, plastic foil or thin paper sheet may also be used as protective foils.

In an embodiment, the protective foil comprises a first surface facing the fixation wax and a second surface, opposite the first surface, and wherein the first surface comprises an adhesive coating.

The present disclosure is also directed to a method for fastening a fastening element with a workpiece comprising the steps of:
- providing a fastening element as described above,
- providing a workpiece
- arranging the contact surface of the fastening element facing the workpiece
- pushing the fastening element against the workpiece such that the fixation wax overflows the edges of the protective foil and the fixation wax gets into contact with the surface of the workpiece.

In an embodiment, a tool presses the protective foil in the direction of the fixation was before pushing the fastening element against the workpiece. The tool may be integrated to an automated joining machine for instance.

A specific embodiment of the present invention will now be described, by way of example only and with reference to the accompanying drawings, of which:
Fig. 1 shows a perspective view of a fastening element according to a first embodiment comprising a shaft and a flange with a joining surface and an application area, a fixation wax being provided in the application area and a protective foil covering the fixation wax;
Fig. 2 shows the fastening element of Fig. 1 without the protective foil or the fixation wax;
Fig. 3 shows the fastening element of Fig. 1 without the protective foil, but with the fixation wax;
Fig. 4 shows the fastening element of Fig. 1 with a tool for pressing the protective foil;
Fig. 5 shows the fastening element of Fig. 4 the fixation wax exposed at the edge of the protective foil;
Fig. 6 shows a fastening element according to a second embodiment, comprising a permanent adhesive being provided on a first area of the joining surface, and the fixation wax being provided on the application area, the application area being different from the first area.

Unless otherwise indicated, the same reference numbers in the figures refer to identical or similar objects.

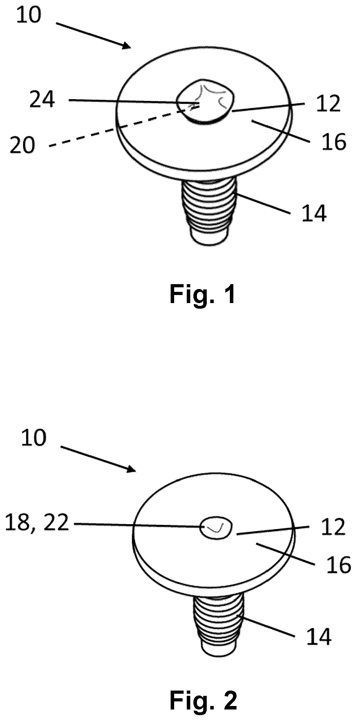

Fig. 1 shows a fastening element 10 comprising a fastening section and a joining surface 12. The fastening section is a shaft 14 extending along a longitudinal axis X. The shaft 14 can for instance be a threaded shaft. The shaft is adapted to be connected to a component (not shown) to reliably join a workpiece to the component. The fastening element 10 of Fig. 1 further comprises a flange 16 formed on and extending radially to an end of the shaft 14. The flange can be a circular flange with a flange diameter. The flange 16 is radially delimited by an outer edge and comprises a top surface which forms the joining surface. The fastening element 10 is a stud (or glue stud).

The joining surface 12 comprises an application area 18 destined to receive a fixation wax 20 (or a drop of fixation wax). The fixation wax 20 is a tacky wax. Tacky wax is a wax and therefore easily plastically deformable at ambient temperature but unlike normal wax it has a tacky surface in its solid state. The fixation wax may for instance be a wax similar to the THOWAX STICK-ON-WACHS commercialized by YETI-DENTAL^{®}. The fixation wax 20 has sufficient adhesive forces to hold the fastening element 10 on the workpiece. The application area is, as shown in Fig. 2, for instance defined by a recess 22. The recess 22 may be in the middle of the flange. In other words, the bottom of the recess forms the application area.

The fixation wax 20 may have the shape of a drop extending within the recess 22. The volume of the fixation wax for instance is slightly greater than the volume of the recess. The drop protrudes from the recess, such that a portion of the fixation wax is above the plane formed by the joining surface.

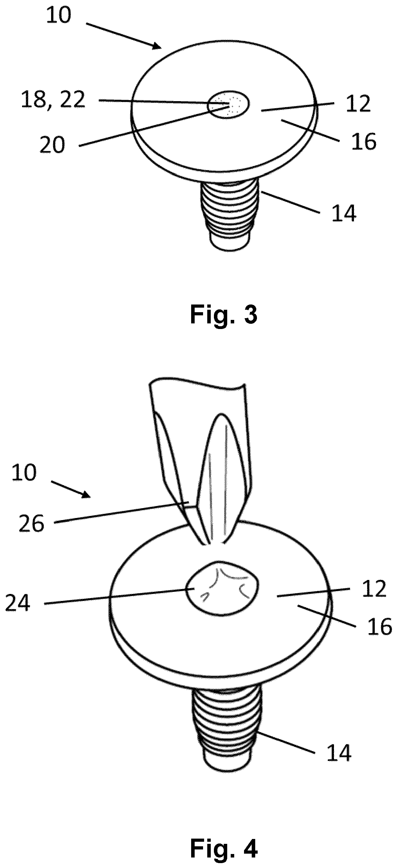

As seen in Fig. 1 and Fig. 4, the fixation wax 20 is covered by a protective foil 24. The protective foil covered the fixation wax 20. The dimension of the protective foil 24 is slightly greater than the dimension of the drop of wax on the joining surface, such that said fixation wax is entirely covered. However, the protective foil 24 does not cover the entire joining surface, such that during the joining process, the fixation wax may overflow the edges of the protective foil and the fixation wax 20 gets into contact with the surface of the workpiece.

The protective foil 24 sticks to the fixation wax 20. The protective foil 24 is for instance an aluminium foil. In an alternative or additional embodiment, the protective foil 24 may have an adhesive surface to further increase transport safety. The adhesive surface faces the fixation wax. The adhesive surface then also can also adhere to the bolt flange around the protective wax and more pressure is required to push the fixation wax 20 out from the protective foil. These further limits exposure of the wax due to vibrations during transport.

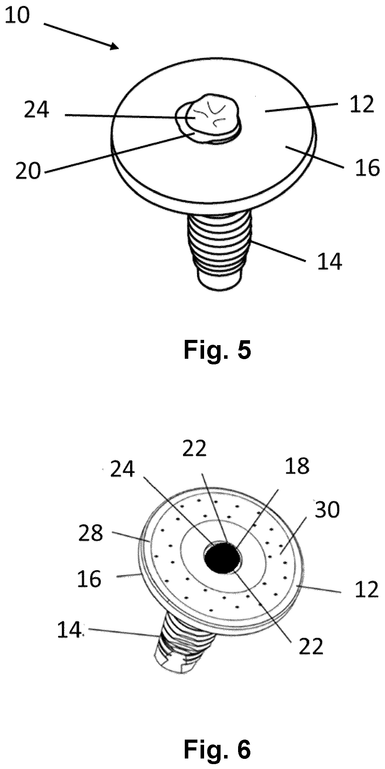

When the fastening element of Fig. 1 has to be glued to a workpiece, the fixation wax 20 is pressed out sideways past the protective foil 24 and fixes the fastening element 10 to the workpiece. For improved fixing, and particularly when using an adhesive surface that adheres to the joining surface 12, the protective foil 24 may be first pressed with a tool 26, as depicted in Fig. 4. The tool 26 applies an effort on the protective foil 24 and fixation wax 20 along the longitudinal direction to presses the fixation wax out from below the protective foil, as shown in Fig. 5. This can be done manually or automatically in a feeder of a joining machine. Using the tool 26 allows to press out a larger volume of fixation wax and reduces the surface area of the protective foil.

Fig. 6 shows a further embodiment of a fastening element 10'. The joining surface comprises a first area 28 and the application area 18. The first area 28 is destined to receive a permanent adhesive 30. Two components systems and moisture-curing one-component systems with medium or high viscosity and anaerobical curing one component systems may be used as permanent adhesives 30. The fastening element 10' is thus fixed solely by the tackiness and toughness of the uncross linked adhesive mass alone. A permanently plastic medium to high viscosity sealing compound could also be used, but this could lead to contamination of the production environment. The permanent adhesive 30 is for instance an epoxy resin adhesive, a polyurethane resin adhesive or an adhesive resin component comprising methacrylate monomers, amines and additional rubbers and toughening agents. The permanent adhesive 30 may also be an adhesive for low-energy surfaces (polyurethane resin adhesive, polypropylene adhesive), a thermally and/or electrically conductive adhesive, a flexible adhesive and/or a FST (Fire, Smoke, and Toxicity) compliant adhesive. More generally, the permanent adhesive may be any cold curing adhesive. The fixation wax 20 will enable for instance an immediate holding of the fastening element, wherein the permanent adhesive will allow a stronger joining. For instance, the fastening element 10' will be pushed against the workpiece such that the fixation wax 20 gets into contact with the surface of the workpiece for preliminarily holding the fastening element on the workpiece, while the permanent adhesive 30 for permanently holding the fastening element on the workpiece becomes squeezed and can slowly cure.

The fastening element 10' is thus directly preliminary held onto the workpiece with the fixation wax 20 which comes into contact with the workpiece after being squeezed to the workpiece. In the state of the fastening element 10' held by the fixation wax 20 securely in the prescribed position on the workpiece, the permanent adhesive 30 can then harden without further holding measures, of a mechanical nature for example, being necessary. When the permanent adhesive 30 is completely hardened, it transmits a significantly greater holding action than the fixation wax.

The fastening element is hereby described as a stud, but in other embodiments, the fastening element may be a stud, a nut, a retainer, a spacer, a cable binder or any kind of fastener comprising a joining surface.
fastening element 10 10'
joining surface 12
shaft 14
longitudinal axis X
flange 16
application area 18
fixation wax 20
recess 22
protective foil 24
tool 26
first area 28
permanent adhesive 30

## Claims

1. Fastening element (10) with a joining surface which has an application area to which a fixation wax is applied, wherein a protective foil is arranged on the fixation wax.

2. Fastening element (10) according to claim 1, wherein the fastening element is a stud which has a shank extending along a central axis and a flange extending transversely thereto.

3. Fastening element (10) according to claim 1 or 2, wherein the joining surface is arranged on an upper side of the flange facing away from the shank, and wherein a diameter of the application area is smaller than a diameter of the joining surface.

4. Fastening element (10) according to any of claims 1 to 3, wherein the application area is formed by a recess and the fixation wax extends in the recess.

5. Fastening element (10) according to claim 4, wherein the recess is circular.

6. Fastening element according to claim 4 or 5, wherein the volume of the fixation wax is greater than the interior volume of the recess.

7. Fastening element according to claims 2 and any of claims 4 to 6, wherein the recess is a circular recess centred on the flange.

8. Fastening element (10) according to any of claims 1 to 6, wherein the protective foil has the same size or is slightly greater than the application area.

9. Fastening element (10) according to any of claims 1 to 7, wherein the protective foil is an aluminium foil.

10. Fastening element (10) according to any of claims 1 to 8, wherein the protective foil comprises a first surface facing the fixation wax and a second surface, opposite the first surface, and wherein the first surface comprises an adhesive coating.

11. Method for fastening a fastening element with a workpiece comprising the steps of:
- providing a fastening element according to any of claims 1 to 8,
- providing a workpiece arranging the contact surface of the fastening element facing the workpiece;
- pushing the fastening element against the workpiece such that the fixation wax overflows the edges of the protective foil and the fixation wax gets into contact with the surface of the workpiece.

12. Method according to claim 9, wherein a tool presses the protective foil in the direction of the fixation was before pushing the fastening element against the workpiece.
